Europäisches Patentämt

European Patent Office

Office européen des brevets

(11) Numéro de publication: **0 388 844**
**A1**

## (12) DEMANDE DE BREVET EUROPEEN

(21) Numéro de dépôt: **90105125.0**

(22) Date de dépôt: **19.03.90**

(51) Int. Cl.⁵: **H02G 15/10, H02G 15/08, H01R 13/53**

(30) Priorité: **22.03.89 FR 8903759**

(43) Date de publication de la demande:
**26.09.90 Bulletin 90/39**

(84) Etats contractants désignés:
**BE CH DE FR GB IT LI LU NL**

(71) Demandeur: **CABLERIES DE LENS**
**36 rue de Londres**
**F-62300 Lens(FR)**

(72) Inventeur: **Brouet, Jacques**
**1 rue Demarquay**
**F-75010 Paris(FR)**
Inventeur: **Becker, Jean**
**263 rue d'Ardres Autingues**
**F-62610 Ardres(FR)**
Inventeur: **Naudin, Jacques**

**décédé(FR)**

(74) Mandataire: **Weinmiller, Jürgen et al**
**Lennéstrasse 9 Postfach 24**
**D-8133 Feldafing(DE)**

(54) **Coffret de raccordement et/ou de dérivation de sécurité pour cables éléctriques à moyenne tension.**

(57) Il comporte :

a) des palpeurs (14, 15, 16 ; 30, 31, 32) de détection de chaque jonction ou dérivation, mobiles chacun entre une position de repos correspondant à son absence, où il s'oppose à la fermeture de la porte (2A) du coffret, et une position active correspondant à l'insertion de la jonction (11) ou dérivation (8) dans le coffret,

b) une coquille de compression latérale (45) empêchant le déboîtement de l'ensemble des pièces de jonction embrochées,

c) une coquille de compression verticale (46) empêchant le déboîtement de l'ensemble des pièces de dérivation embrochées, et

d) une serrure de sécurité (3) à clef, ne permettant l'ouverture du coffret qu'après coupure de la tension du réseau et la remise sous tension que lorsque la porte est fermée.

FIG.1

**Coffret de raccordement et/ou de dérivation de sécurité pour câbles électriques à moyenne tension.**

La présente invention concerne un coffret de raccordement et/ou de dérivation de sécurité pour câbles électriques à moyenne tension, notamment pour installations mobiles du chantiers, à éléments prémoulés embrochables.

L'utilisation de câbles électriques à moyenne tension (5 à 20 Kilovolts) a donné lieu à la mise au point de matériel de raccordement préfabriqué pour prises, jonctions et dérivations embrochables. On connait des coffrets de raccordement utilisés pour des connexions fixes, généralement pour des câbles enterrés. Ces coffrets assurent la sécurité désirable. Ils sont cependant volumineux et ne peuvent être modifiés facilement lorsque l'on veut changer des raccordements ou dérivations, ou en ajouter sur des raccordements ou dérivations existants. On effectue donc en général dans les installations mobiles ou sur chantier des raccordements ou dérivations à la demande, sans disposer des mêmes sécurités (impossibilité d'effectuer une connexion ou une dérivation si l'un des câbles est sous tension, impossibilité de mettre en service les connexions ou dérivations si tous les branchements nécessaires n'ont pas été effectués).

La présente invention a pour but de procurer un coffret de raccordement et/ou de dérivation utilisable en installation mobile ou sur chantier, présentant les mêmes sécurités qu'un coffret pour installation fixe, pouvant être disposé dans un lieu accessible à du personnel non qualifié, mais de volume réduit, et facilement adaptable à des conditions d'environnement plus ou moins sévères.

Le coffret de raccordement selon l'invention est caractérisé en ce qu'il comporte :

a) des palpeurs de détection de chaque jonction ou dérivation, mobiles chacun entre une position de repos correspondant à son absence, où il s'oppose à la fermeture de la porte du coffret, et une position active correspondant à l'insertion de la jonction ou dérivation dans le coffret,

b) une coquille de compression latérale empêchant le déboîtement de l'ensemble des pièces de jonction embrochées,

c) une coquille de compression verticale empêchant le déboîtement de l'ensemble des pièces de dérivation embrochées, et

d) une serrure de sécurité à clef, ne permettant l'ouverture du coffret qu'après coupure de la tension du réseau et la remise sous tension que lorsque la porte est fermée.

Il répond en outre de préférence à au moins l'une des caractéristiques suivantes :

- Les palpeurs comprennent des tétons repoussés par des ressorts vers une position de repos empêchant la fermeture de la porte, et ramenés en position active par la jonction ou la dérivation correspondante insérée dans le coffret.

- Les palpeurs comprennent également des doigts liés aux tétons en rotation autour d'axes, et venant en saillie au-delà du volume interne du coffret pour empêcher la fermeture de la porte en position de repos des palpeurs et s'effaçant en position active des palpeurs.

- La face interne de la porte est munie d'ergots qui viennent bloquer les palpeurs dans leur position de repos.

- La serrure est à clef prisonnière lorsque la porte est ouverte.

Il est décrit ci-après, à titre d'exemple et en référence aux figures du dessin annexé, un coffret de raccordement pour câbles à moyenne tension selon l'invention.

La figure 1 représente la structure générale du coffret.

La figure 2 représente le système de sécurité des jonctions.

La figure 3 représente le système de sécurité des dérivations.

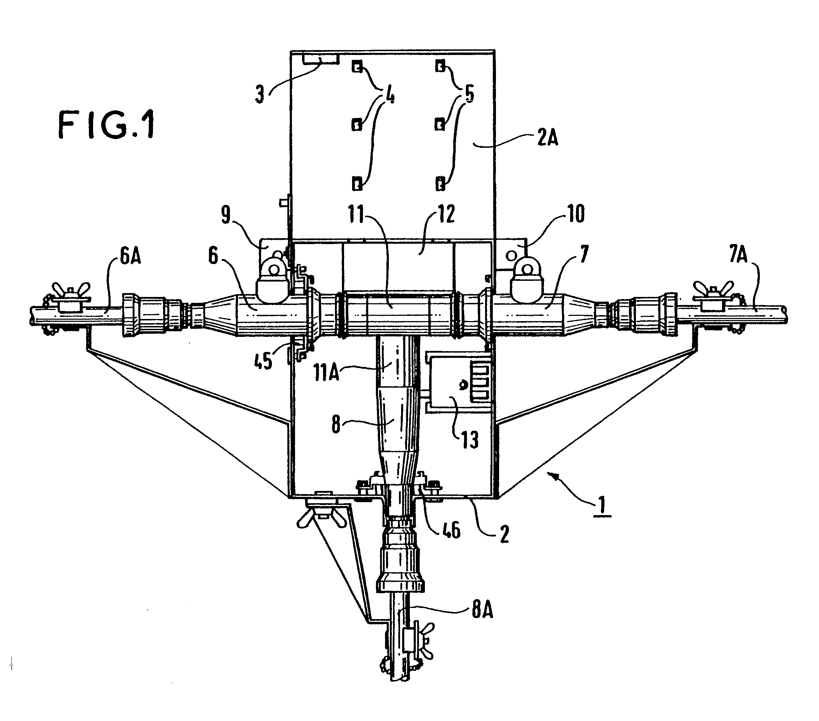

Dans la figure 1, le coffret repère 1 comporte un boîtier parallélépipèdique 2 et une porte 2A vue ouverte. Celle-ci est munie d'une serrure de sécurité représentée schématiquement en 3, à clef prisonnière. Cette serrure est reliée au circuit électrique de manière que l'on ne puisse l'ouvrir que si la tension du réseau alimentant le coffret est coupée.

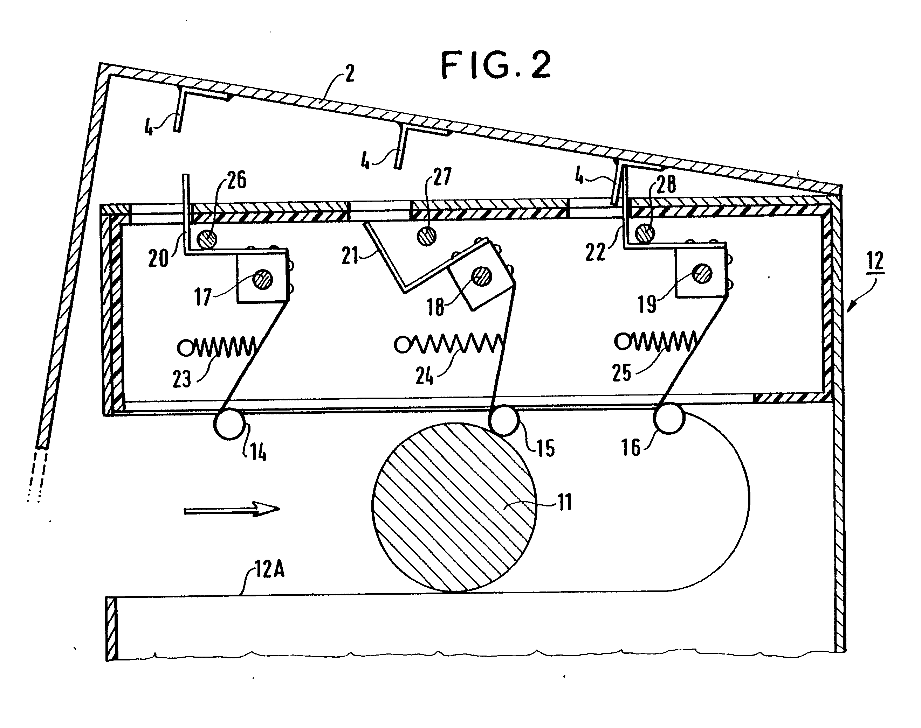

La face inférieure de cette porte est munie d'ergots de sécurité tels que 4, 5 dont la fonction sera indiquée ci-après en référence à la figure 2. Des pattes de fixation 9, 10 permettent l'accrochage du coffret à un panneau.

Le coffret comporte des entrées de jonction telles que 6, 7 pouvant être reliées par un prolongateur 11, pour des câbles 6A, 7A, et des entrées de dérivation telles que 8, pouvant être munies d'éléments de liaisons tels que 11A, pour des câbles tels que 8A. Bien que l'on ne voie que deux entrées de jonction et une entrée de dérivation, on comprendra qu'un coffret comporte en général des entrées de jonction multiples sur des rangées en vis-à-vis et une entrée de dérivations multiples sur une rangée.

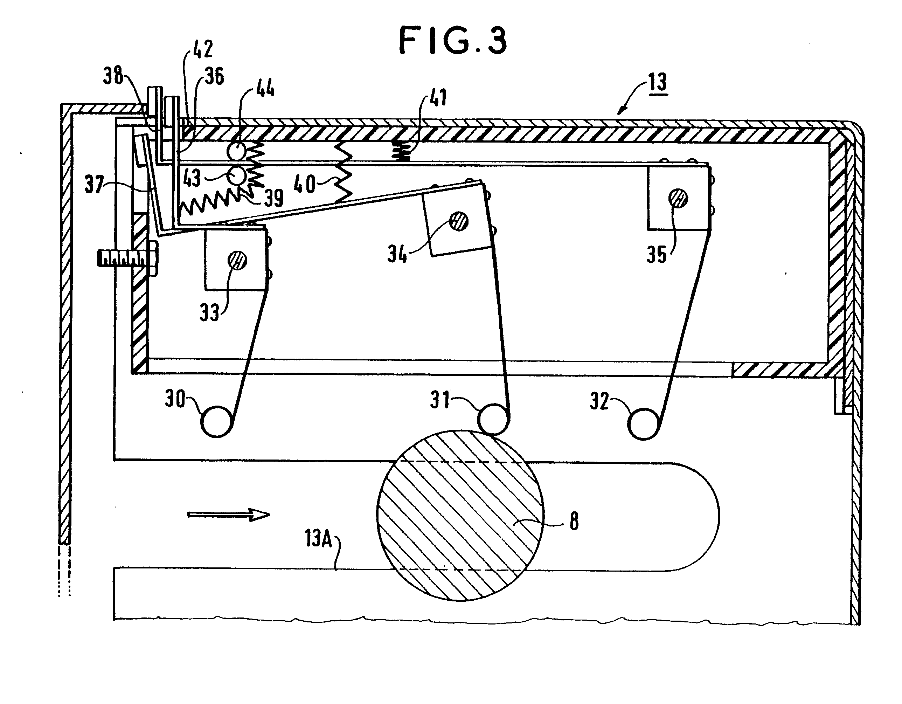

Un boîtier de sécurité de jonctions 12 et un boîtier de sécurité de dérivations 13 interdisent de fermer la porte du coffret tant que toutes les jonctions ou dérivations (ou éventuellement des bouchons de fermeture) n'ont pas été mises en place à l'intérieur du coffret, comme on le verra plus loin en référence aux figures 2 et 3. Une coquille de compression latérale 45 empêche le déboîtement partiel de l'ensemble des pièces de jonction embrochées.

Une coquille de compression inférieure 46 empêche le déboîtement de l'ensemble des pièces de dérivation embrochées.

Le système de sécurité de jonctionnement est représenté en figure 2. Le boîtier de sécurité 12 est disposé au-dessus d'alvéoles tels que 12A d'introduction des pièces de jonctionnement. Des tétons 14, 15, 16 pénètrent dans l'alvéole 12A en position de non-fonctionnement du coffret.

Ces tétons sont montés à pivotement autour d'axes 17, 18, 19, et sont reliés de l'autre côté de ces axes à des doigts 20, 21, 22, qui viennent en saillie hors du boîtier de sécurité, empêchant ainsi la fermeture de la porte 2A du coffret lorsque les tétons sont en position de repos (absence de pièce de jonctionnement dans l'alvéole) vers laquelle ils sont rappelés par des ressorts 23, 24, 25. Le déplacement angulaire des doigts 20, 21, 22 est limité par des butées 26, 27, 28. Pour assurer un meilleur blocage de la porte du coffret en position de non-fonctionnement, un doigt tel que 22 vient en prise en position de non-fonctionnement avec un ergot tel que 4 disposé sur la face inférieure de la porte du coffret.

Lorsque l'on introduit une pièce de jonction telle que 11 dans l'alvéole, celle-ci soulève un des tétons du boîtier de sécurité et efface le doigt correspondant. Une fois toutes les pièces de jonction (ou les bouchons de sécurité les remplaçant) mis en place dans l'alvéole, aucun des doigts 20, 21, 22 ne fait plus saillie hors du boîtier de sécurité. Ils ne s'opposent donc plus à la fermeture de la porte du coffret.

Le système de sécurité de dérivation représenté en figure 3 repose sur de même principe que celui relatif au jonctionnement.

Le boîtier de sécurité de dérivation 13 est disposé latéralement à des alvéoles tels que 13A d'introduction des pièces de dérivation 8. Il est muni de tétons 30, 31, 32 pénétrant dans l'alvéole 13A en position de non-fonctionnement du coffret. Ces tétons sont montés à pivotement autour d'axes 33, 34, 35 portant du côté opposé des doigts 36, 37, 38, qui viennent en saillie hors du boîtier de sécurité, empêchant ainsi la fermeture de la porte du coffret lorsque les tétons sont au repos, et pénètrent dans l'alvéole, en l'absence de pièces de dérivation dans celui-ci, sous l'effet des ressorts de rappel 39, 40, 41.

Le déplacement angulaire des doigts 36, 37, 38 est limité par des butées 42, 43, 44.

Lorsque l'on fait pénétrer une pièce de dérivation telle que 8 dans l'alvéole, celle-ci soulève un des tétons du boîtier de sécurité et efface le doigt correspondant, qui n'est plus en saillie hors du boîtier (la position d'effacement a été représentée pour le doigt 37, sous l'effet de la pression de la pièce 8 sur le téton 31).

Dès que toutes les pièces de dérivation (ou éventuellement les bouchons correspondants) ont été mis en place, aucun des doigts 36, 37, 38 ne fait plus saillie hors du boîtier et ne s'oppose plus à la fermeture de la porte du coffret.

Le coffret de l'invention peut être adapaté facilement à des conditions d'environnement plus ou moins sévères. On peut en particulier le suspendre à un mur ou à un plafond ou le poser à même le sol. On peut le rendre étanche dans le cas où il devrait être placé dans un lieu humide ou même dans l'eau. Il peut au besoin être renforcé mécaniquement pour résister à des sollicitations mécaniques importantes telles que coups ou chutes de débris.

## Revendications

1/ Coffret de raccordement et/ou de dérivation de sécurité pour câbles électriques à moyenne tension, notamment pour installations mobiles ou pour chantiers, à éléments prémoulés embrochés, caractérisé sen ce qu'il comporte

a) des palpeurs (14, 15, 16 ; 30, 31, 32) de détection de chaque jonction ou dérivation, mobiles chacun entre une position de repos correspondant à son absence, où il s'oppose à la fermeture de la porte (2A) du coffret, et une position active correspondant à l'insertion de la jonction (11) ou dérivation (8) dans le coffret,

b) une coquille de compression latérale (45) empêchant le déboîtement de l'ensemble des pièces de jonction embrochées,

c) une coquille de compression verticale (46) empêchant le déboîtement de l'ensemble des pièces de dérivation embrochées, et

d) une serrure de sécurité (3) à clef, ne permettant l'ouverture du coffret qu'après coupure de la tension du réseau et la remise sous tension que lorsque la porte est fermée.

2/ Coffret de raccordement selon la revendication 1, caractérisé en ce que les palpeurs comprennent des tétons repoussés par des ressorts (23, 24, 25 ; 39, 40, 41) vers une position de repos empêchant la fermeture de la porte (2A), et ramenés en position active par la jonction (11) ou la dérivation (8) correspondante insérée dans le coffret.

3/ Coffret de raccordement selon la revendication 2, caractérisé en ce que les palpeurs comprennent également des doigts (20, 21, 22 ; 36, 37, 38) liés aux tétons en rotation autour d'axes (17, 18, 19 ; 33, 34, 35), et venant en saillie au-delà du volume interne du coffret pour empêcher la fermeture de la porte (2A) en position de repos des palpeurs et s'effaçant en position active des palpeurs.

4/ Coffret de raccordement selon la revendication 3, caractérisé en ce que la face interne de la porte est munie d'ergots (4, 5) qui viennent bloquer les palpeurs dans leur position de repos.

5/ Coffret selon l'une des revendications 1 à 4, caractérisé en ce que la serrure (3) est à clef prisonnière lorsque la porte est ouverte.

FIG.1

EP 0 388 844 A1

FIG.2

# FIG.3

EP 0 388 844 A1

Office européen des brevets

# RAPPORT DE RECHERCHE EUROPEENNE

Numero de la demande

EP    90 10 5125

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2102599 (LE TRANSFORMATEUR)<br>* page 1, lignes 1 - 39 *<br>--- | 1 | H02G15/10<br>H02G15/08<br>H01R13/53 |
| A | FR-A-2179547 (MERLIN GERIN)<br>* figures 1, 2 *<br>----- | 1 | |

**DOMAINES TECHNIQUES RECHERCHES (Int. Cl.5)**

H02G
H01R

Le présent rapport a été établi pour toutes les revendications

| Lieu de la recherche | Date d'achèvement de la recherche | Examinateur |
|---|---|---|
| LA HAYE | 08 MAI 1990 | LOMMEL A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................
& . membre de la même famille, document correspondant

EPO FORM 1503 03.82 (P0402)